# EUROPEAN PATENT SPECIFICATION

(11) **EP 4 314 664 B1**
(45) Date of publication and mention of the grant of the patent: **20.08.2025**
(21) Application number: 22719917.1
(22) Date of filing: 31.03.2022
(51) Int. Cl.: F24F 11/48, F24F 11/56, F24F 11/88, F24F 11/89, F24F 1/0043, F24F 1/60, F24F 13/24, F24F 13/20, F24F 110/00, F24F 13/14, F24F 13/32, G05B 15/02

(54) **NFC ENABLED HVAC FIELD DEVICE AND AN HVAC SYSTEM**
NFC-AKTIVIERTE HVAC-FELDVORRICHTUNG UND HVAC-SYSTEM
DISPOSITIF DE TERRAIN DE CVC ACTIVÉ PAR NFC ET SYSTÈME CVC

(30) Priority: 31.03.2021 CH 3392021; 30.04.2021 CH 4732021; 14.05.2021 CH 5452021; 14.03.2022 CH 2732022
(43) Date of publication of application: 07.02.2024
(73) Proprietor: Belimo Holding AG, 8340 Hinwil (CH)
(72) Inventor: GROGG, Silvio, 8620 Wetzikon (CH)
(74) Representative: Rentsch Partner AG
(86) International application number: PCT/EP2022/058643
(87) International publication number: WO 2022/207835

(56) References cited:
- EP-A1- 3 668 064
- CH-A1- 707 624
- CN-A- 112 367 127
- US-A1- 2014 087 661

## Description

### Field of the invention

The present invention relates to a heating, ventilating and air conditioning (HVAC) field devices, and in particular to HVAC devices and systems including near field communication means.

### Background of the invention

HVAC systems comprise a plurality of consumers that are arranged distributed in branches or lines and that are supplied with a liquid or gaseous fluid. To obtain a desired distribution of the fluid to the consumers, equalizing, regulating or balancing units are provided, for instance adjustable actuated control elements, such as valves and dampers, wherein the flow through specific consumers is adjusted using different size openings or valve and dampers settings. The actuated parts are mechanically controlled by HVAC actuators, including motorized HVAC actuators coupled to the actuated part. In the field of HVAC, actuators typically comprise an electric motor, coupled (through gears and/or other mechanical coupling) to the actuated part. HVAC actuators are electrically controlled by HVAC controllers, in particular an electronic circuit thereof. In addition, various sensors are used to measure environmental variables such as humidity, temperature or air quality. For example, an air quality sensor may be a sensor for determining a proportion of carbon dioxide or certain contaminants in the air flow, in particular fine dust particles. Furthermore, HVAC sensors are used to determine operational parameters of various elements of an HVAC system, such as an actuated position of an actuated part, and the operational state of an HVAC actuator. Other important sensor types are sensors to measure a flow rate of a fluid and pressure sensors.

In such HVAC configurations the regulating and balancing units must also have individual parameter settings. Certain individual parameters of regulating and balancing units of an HVAC system must be undertaken directly during the installation of the regulating and balancing unit. Thus, individual parameters of the regulating and balancing units may be adjusted for instance by rotating a potentiometer position with a screwdriver or by connecting and operating a service tool using a service socket.

Certain control functions of HVAC systems may be performed from a remote server, the remote server comprising a computer program such as a Building Management System (BSM) to control and monitor a building's mechanical and electrical equipment. Furthermore, certain functions, in particular the commissioning and/or configuration of HVAC systems may be performed by means of portable devices, such as a general purpose mobile computing device (e.g. a smartphone) or a dedicated configuration tool.

U.S. Pat. No. 7,898,147 illustrates an electronically configurable actuator. The actuator comprises an electrically controllable mechanical converter, a wireless interface for receiving data related to operation of the actuator and at least one external device thereof, a settings data module for storing the data, a wired interface for administering external devices based on the data, and a control module for controlling the mechanical converter corresponding to the data. The wireless interface is set up for transmitting radio-based, optical, or acoustic signals, for instance in accordance with a standard such as Bluetooth, IrDA, IEEE 802.11 (WLAN), etc., or in accordance with a mobile communications technique. Data may be prepared on a portable computer, a PDA (personal digital assistant), or a mobile telephone and transmitted to the actuator via the wireless interface.

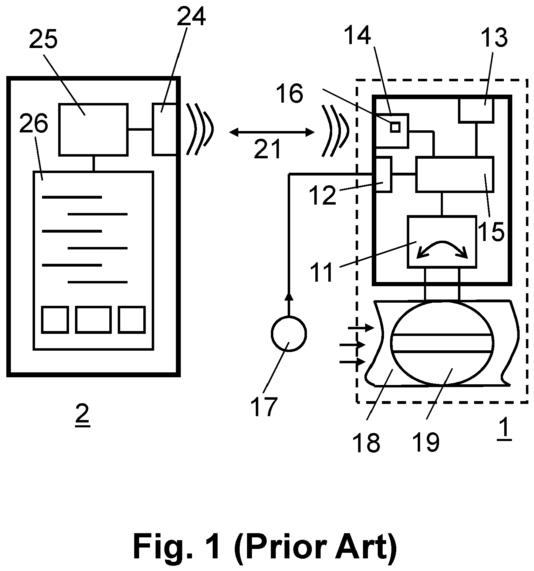

Recently, near field communication (NFC) technology have been used to enable HVAC field devices to be wirelessly configured. U.S. Pat. No. 10261 530 discloses a drive (shown in Figure 1 of the present application) for an HVAC system having an actuator for a control element of the HVAC system. The drive further comprises: a passive NFC transponder that is set up to transmit a unique identifier to a mobile service device before a power supply for the drive is switched on and to receive and store from the mobile service device one or a plurality of drive parameters, and a control module that is set up to control the actuator after a power supply for the drive is switched on, taking into account the one or a plurality of stored drive parameters.

CH 707624 relates to a control device for an HVAC system, a mobile service device for configuring an HVAC system, and a method for configuring an HVAC system that allows configuration prior to powering up, using NFC (Near Field Communication) technology for communication between components and the control device, thereby streamlining the installation and setup process without the need for multiple visits by technicians.

As HVAC devices becoming more and more complex and their positioning and accessibility in HVAC systems more demanding, there is a need for new and improved short range communication enabled HVAC devices.

### Summary of the invention

It is an object of embodiments of the present invention, thereafter referred to as disclosure to provide an HVAC field device and system that at least partially address the disadvantages of known HVAC field devices and systems. In particular, it is an object of embodiments disclosed herein to provide an HVAC device and system that have improved functionality and accessibility.

According to the present disclosure, these objects are achieved by the features of the independent claims. Moreover, further advantageous embodiments emerge from the dependent claims and the description.

The above-identified objective is addressed according to the present disclosure by an HVAC field device comprising a plurality of HVAC device blocks. The HVAC field device comprises:
a) a base HVAC device block comprising: a base housing ; an electric motor configured to drive an actuated part, and/or a sensor for the measurement of an operational parameter of an HVAC system; a base control module connected to the electric motor , and/or the sensor; a base near field communication (NFC) circuit connected to the base control module; and
b) a first add-on HVAC device block comprising: an add-on housing and a first add-on NFC antenna, wherein the base HVAC device block and the first add-on HVAC device block are mechanically connected, and wherein the first add-on NFC antenna is electrically connected to the base HVAC device block.

According to embodiments of the present disclosure, the electric motor may be arranged within the base housing or it may be arranged outside the base housing. In embodiments, the sensor of the base HVAC device block is configured to measure a parameter of the HVAC system, in particular an environmental parameter, such as a temperature, humidity, volatile organic component (VOC), particulate matter (PM) and/or CO2 level of an environment controlled by the HVAC system. Alternatively, or additionally, the sensor of the base HVAC device block is provided to measure operational parameters of various components of the HVAC system such as an actuated position of the actuated part and/or the operational state of the HVAC field device and/or other parameters of the HVAC system, such as a flow rate or differential pressure at locations of a fluid through a fluid transportation system.

In one embodiment, the electrical connection between the first add-on NFC antenna and the base HVAC device block is direct, i.e. without any devices in-between. For example, the direct connection may be an analogue electrical connection transferring an antenna signal to be transmitted.

In another embodiment, the electrical connection between the first add-on NFC antenna and the base HVAC device block is indirect, i.e. via other electrical components such as NFC circuits or microcontrollers, and/or via one or more additional add-on HVAC blocks. In one embodiment, the indirect connection may include a digital signal path between an NFC circuit and a control module.

In one embodiment, the base HVAC device block further comprises a base NFC antenna electrically connected to the base NFC circuit.

In one embodiment, the base HVAC device block and the first add-on HVAC device block are connected directly via an electromechanical interface.

In one embodiment, the base HVAC device block comprises a connection interface of a first-type and the first add-on HVAC device block comprises a connection interface of the first-type and a connection interface of a second-type, wherein the connection interfaces of the first-type and the connection interface(s) of the second-type are configured to be mechanically connectable with each other. In this embodiment, the base HVAC device block and the first add-on HVAC device block are stacked such that the connection interface of the first type is mechanically connected to the connection interface of the second type of adjacent HVAC device block.

In one embodiment, the first add-on HVAC block is removably attached or fixedly attached to the base HVAC block. The housings of the HVAC blocks may be attached to each other so that the HVAC blocks are attached to each other by means of their housings.

In one embodiment, the first add-on HVAC device block is positioned on top or on side of the base HVAC device block. In another embodiment, the base HVAC device block and the first add-on HVAC device block are connected via an additional HVAC block.

In one embodiment, the first add-on NFC antenna is electrically connected directly to the base NFC circuit, wherein the base NFC circuit may also be integrated in the base control circuit and/or the base control module. In one embodiment, the connection is established via high-frequency (HF) connection on antenna side, for example with a frequency of 13,56 MHz.

In one embodiment, the first add-on HVAC device block comprises a first add-on NFC circuit connected to the first add-on NFC antenna.

In one embodiment, the first add-on HVAC device block comprises a first add-on control module connected to the first add-on NFC circuit. In yet another embodiment, the first add-on control module is connected to the base control module.

In one embodiment, the first add-on NFC antenna is configured to interact with an NFC antenna of an external service device, when located inside a communication range of the external service device, allowing data exchange between the HVAC field device and the external service device.

In one embodiment, the HVAC field device is configured to harvest power from the external service device via the first add-on NFC antenna and/or the base NFC antenna.

In one embodiment, the base NFC circuit and/or the first add-on NFC circuit comprises a memory, such as a non-volatile memory. The non-volatile memory of the HVAC field device is used for storing configuration data of the HVAC field device, which is required to run actuator or sensor programs. Advantageously, the presence of non-volatile memory in the base NFC circuit and/or in the first add-on NFC circuit allows to reduce the size of a non-volatile memory in the control module (such as an ASIC or a microcontroller) or to completely eliminate the non-volatile memory from the control module.

In one embodiment, the HVAC field device further comprises a second add-on HVAC device block, wherein the second add-on HVAC device block is positioned between the base HVAC device block and the first add-on HVAC device block or on the top of the first add-on HVAC device block. In yet another embodiment, the second add-on HVAC device block comprises a second add-on NFC antenna electrically connected to the base HVAC device block and/or the first add-on HVAC device block.

In one embodiment, the second add-on HVAC block serves as mechanical and/or electrical interface between the base HVAC block and the first add-on HVAC block.

In one embodiment, the first add-on HVAC device block comprises a cover. The cover may be an integral part of the add-on HVAC block housing or a separate element configured to be mechanically connected to the housing. In yet another embodiment, the device comprises a human interaction device, and the first add-on NFC antenna is located underneath the human interaction device. In one embodiment, the human interaction device is integrated into the cover.

In one embodiment, the first add-on NFC antenna comprises at least two NFC antennas positioned at two opposite sides of the HVAC device.

In one embodiment, the base NFC antenna is positioned in a way that it cannot be accessed via the service device to establish a communication or an access to the base NFC antenna is blocked by the first add-on HVAC device block. In yet another embodiment, the communication range of the first add-on NFC antenna and/or base NFC antenna is from 0 to 0.1 m, in another embodiment from 0 to 4 cm and in yet another embodiment from 0 to 1 cm. These values are exemplary only, and they are not to be understood as essential.

It is another objective of the present invention to provide an HVAC system comprising an HVAC field device according to the invention. The proposed HVAC system comprises an actuated part, such as a valve and/or a damper, drivingly connected to the electric motor of the base HVAC device block of the HVAC field device.

It is another objective of the present invention to provide a method for improving NFC communication between an HVAC field device and a service device, the method comprising the step of adding an add-on HVAC device block comprising an NFC antenna to a base HVAC device block of the HVAC field device. In one embodiment, the add-on block comprises the add-on NFC antenna connected to an add-on NFC circuit. In another embodiment, where the add-on NFC antenna is connected to the add-on NFC circuit, the base NFC antenna is disabled from operation.

It is another objective of the present invention to provide a method for configuring an HVAC field device, the method comprising the steps of:
a) wirelessly transferring configuration information from a service device to a first add-on HVAC device block via the first add-on NFC antenna
b) mechanically and electrically connecting the first add-on HVAC device block to a base HVAC device block, and
c) configuring the HVAC field device based on the received configuration information. Alternatively, when the base HVAC block comprises a base NFC antenna, the step a) may be as follows: wirelessly transferring configuration information from a service device to a base HVAC device via the base NFC antenna.

### Brief Description of the Drawings

The herein described disclosure will be more fully understood from the detailed description given herein below and the accompanying drawings which should not be considered limiting to the invention which is defined in the appended claims. The drawings which show:
Figure 1: shows a schematic depiction of a HVAC device having a passive NFC transponder that is disposed in the effective range of an active NFC module of a mobile service device according to the prior art;
Figure 2A: show a schematic depiction of a base HVAC block and an add-on HVAC block;
Figures 2B and 2C: show a schematic depiction of an HVAC device according to embodiments of the invention comprising a base HVAC block and an add-on HVAC block;
Figures 3A and 3B: shows a schematic depiction of an HVAC device according to one embodiment of the invention comprising two NFC antennas;
Figure 4: shows a schematic depiction of an HVAC device according to one embodiment of the invention communicating with a service mobile device;
Figure 5: shows a schematic depiction of an HVAC device according to one embodiment of the invention, comprising a base HVAC block, and an add-on HVAC block comprising a first add-on control module and a first add-on NFC circuit;
Figure 6 and 7: show a schematic depiction of an HVAC device according to embodiments of the invention comprising a second add-on module;
Figure 8A and 8B: shows a schematic depiction of an HVAC device according to the embodiment of the invention comprising a cover;
Figure 9: shows a schematic depiction of an HVAC device according to one embodiment of the invention comprising a human interaction device;
Figure 10: shows a schematic depiction of an HVAC device according to one embodiment of the invention comprising multiple NFC antennas;
Figure 11: shows a schematic depiction of an HVAC device according to the embodiment of the invention comprising printed circuit boards (PCB) and flex-print antenna;
Figure 12: shows a schematic depiction of an HVAC system according to one embodiment of the invention;
Figure 13: shows a schematic depiction of an HVAC device according to one embodiment of the invention comprising memory modules communicating with the service mobile device;
Figure 14: shows a schematic diagram of steps of a method of configuration of an HVAC device according to one embodiment of the invention.

### Detailed Description

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

Field devices comprise devices of an HVAC system which are located within the controlled environment or which are mechanically connected, e.g. by the fluid transportation system, to the controlled environment. Field devices implement one or more electrical and/or mechanical functions and comprise but not limited to actuators, sensors, or a combination thereof.

Near field communication (NFC) is the technology used for the communication between two devices in a short range, typically over a distance of 0 to 10 cm. Typical applications include contactless payment systems replacing credit cards. Usually, NFC is used for sharing small files with limited transfer speed. NFC components such as NFC circuits are usually equipped with non-volatile memory storage in the kb range. In general, an NFC circuit allows in connection with NFC antenna to exchange data with another NFC circuit. NFC uses the 13.56 MHz frequency spectrum, and it is defined primarily by ISO 18000-3 and ISO 13157 and ISO 15693. NFC components, such as circuits, antennas and readers are commercially available, and NFC readers are integrated in most smartphones.

Figure 1 is a schematic representation of an example from the prior art showing use of NFC technology for HVAC systems. A HVAC drive 1 has a passive NFC transponder 14 that is disposed in the effective range of an active NFC module 24 of a mobile service device 2. The mobile service device 2 comprises the control module 25 configured to control an active NFC module 24 of the mobile service device 2, and a user interface 26 set up to display identifiers and drive parameters. The HVAC drive 1 comprises a control module 15 configured to control a communication module 13, a sensor interface 12 and a sensor 17, the passive NFC transponder 14 and an actuator 11. The active NFC module 24 of the mobile service device 2 cooperates with the NFC transponder 14 of the drive 1 via the operative connection 21 to read out the unique identifier 16 of the drive 1 and to read and write drive parameters.

In Figure 1, the HVAC drive 1 comprises a fluid connection 18 that is connected to a water pipe or air channel. The fluid connection 18 may be attached to the housing of the HVAC drive 1 such that the housing and the fluid connection 18 together form a unit (illustrated with the broken line); the fluid connection 18 comprises a control element 19, such as a valve, with which the through-flow quantity of the fluid is controlled. The control element 19 is connected to the actuator 11 of the drive 1. The actuator 11 is housed in the housing of the drive 1. The actuator 11 comprises a motor with which a mechanical force is generated in order to move the control element 19 arranged in the fluid connection 18 into a required position.

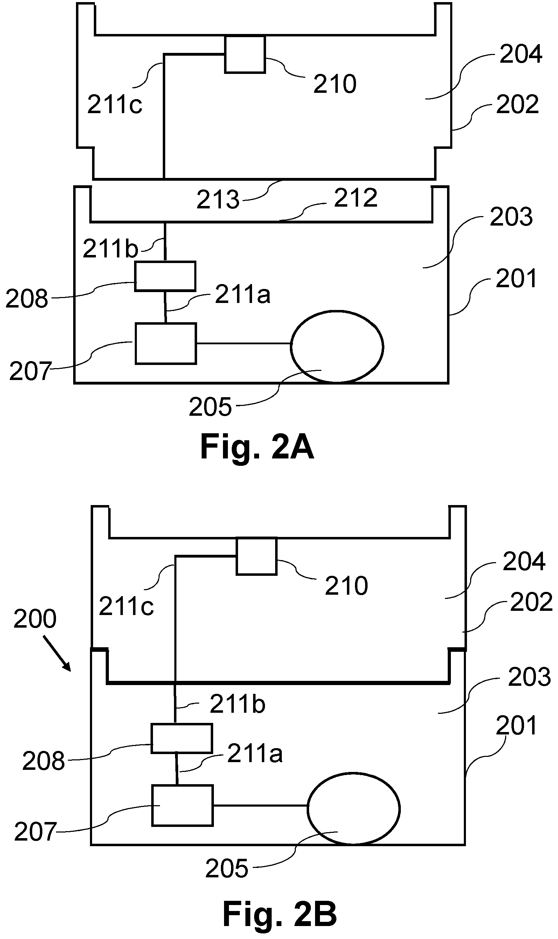

Figure 2A shows a highly schematic cross section of building blocks of HVAC field device 200 according to the present disclosure. According to the embodiment shown in Figure 2A, the HVAC field device 200 comprises a base HVAC device block 201 and a first add-on HVAC device block 202. Figure 2B shows the HVAC field device 200 in an assembled form, wherein the base HVAC device block 201 and the first add-on HVAC device block 202 are mechanically connected via mechanical or electro-mechanical interfaces 212 and 213.

In one embodiment, the base HVAC device block 201 comprises a connection interface of a first-type 212. The first add-on HVAC device block 202 may have a connection interface of the first-type and a connection interface of a second-type 213, wherein the connection interfaces of the first-type and the connection interface(s) of the second-type are configured to be mechanically connectable with each other. In this embodiment, the base HVAC device block 201 and the first add-on HVAC device block 202 are stacked on each other such that the connection interface of the first type is mechanically connected to the connection interface of the second type of the adjacent add-on HVAC device block 202 as shown in Figure 2B. In one embodiment, the base HVAC device block 201 and the first add-on HVAC device block 202 are electrically connectable. In particular, the interfaces of the base HVAC device block 201 and the first add-on HVAC device block 202 may be configured to allow a mechanical and an electrical connection.

According to one embodiment of the invention, the base HVAC device block 201 comprises: a base housing 203; an electric motor 205 and/or a sensor; a base control module 207 connected to the electric motor 205 and/or the sensors. The base HVAC device block 201 further comprises a base near field communication (NFC) circuit 208 connected to the base control module 207, for example via an electrical connection 211a, which includes an inter-integrated circuit (I2C) connection. The connection 211a is configured to transfer data and/or power between the base near NFC circuit 208 and the base control module 207. The base NFC circuit is configured to be connected to an NFC antenna via an electrical connection 211b. In one embodiment, the base control module 207 and the base NFC circuit 208 may be integrated on a single electronic board.

Depending on the particular embodiment, the control module 207 of the base HVAC device block 201 is connected either to the electric motor 205 and/or to the sensor. When connected to the electric motor 205, the control module 207 is configured to control the electric motor 205 in order to implement one or more HVAC control functions. When connected to the sensor, the control module 208 is configured to receive and/or process signals representative of operational parameter(s) of the HVAC system, such as a temperature and/or humidity or signals representative of operational parameters of various components of the HVAC system.

In the embodiment shown in Figures 2A and 2B, the add-on HVAC device block 202 comprises: an add-on housing 204 and a first add-on NFC antenna 210, positioned inside the housing 204. The base HVAC device block 201 and the first add-on HVAC device block 202 are mechanically connected via respective housings 203 and 204. The first add-on NFC antenna 210 is electrically connected to the base HVAC device block 201. The electrical connection between the base HVAC device block 201 and the first add-on HVAC device block 202 is schematically represented by electrical wires 211b and 211c, which connection establishes the electrical connection between the first add-on NFC antenna 210 and the base NFC circuit 208. In one embodiment, the electrical connection between the HVAC blocks is achieved through the direct connection via the electromechanical interfaces 212,213.

The first add-on HVAC block 202 may be removably attached or fixedly attached to the base HVAC block 201. The connection between the HVAC device blocks may be achieved using different adhesive and/or fastening means. According to embodiments of the present disclosure, the fastening means may be for example latches, snap connections, screws or bolts in order to mechanically connect the adjacent HVAC device blocks. Alternatively, or additionally, the HVAC device blocks are welded together after being connected, in particular by ultrasonic welding or laser welding. According to the specific requirements on the HVAC field device 200, a sealant may be provided at the connection interfaces to seal the HVAC device blocks together, with respect to humidity, dust or other sources of contamination.

In the embodiment of Figure 2B, the first add-on HVAC device block 202 is positioned on top of the base HVAC device block 201. Alternatively, the first add-on HVAC device block 202 may be positioned on the side of the base HVAC device block 201. In addition, the base HVAC device block 201 and the first add-on HVAC device block 202 may be connected via an additional HVAC block or additional mechanical interface.

In one embodiment as shown in Figure 2B, the first add-on NFC antenna 210 is connected to the base NFC circuit 208. In this embodiment, the electrical connection between the first add-on NFC antenna 210 and the base HVAC device block 201 is a direct electrical connection. In this way, the first add-on NFC antenna 210 is operatively coupled to the base NFC circuit 208, and it may provide the power harvested via an inductive coupling with an external active NFC reader device such as a mobile phone. The base control module 207 and the first NFC control circuit 208 may be advantageously integrated in one electronic circuit. In one embodiment the base control module 207 is an application specific integrated circuit (ASIC), in particular it may be the ASIC that comprises a motor controller.

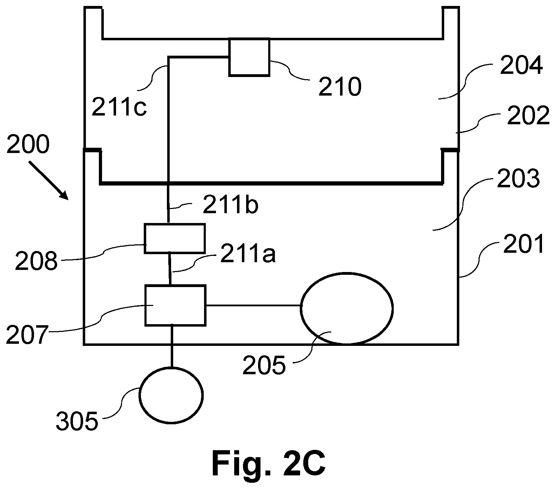

In one embodiment as shown in Figure 2C, the base HVAC block 201 comprises a sensor 305 positioned outside the housing 203 and connected to the base control module 207. In another embodiment, the sensor 305 may be integrated inside the housing or at least one part of the sensor 305 may be integrated inside the housing 203. For example, the first element of the sensor may be positioned inside an air channel and it may direct the air into the housing 203 where the air is sensed by the second part of the sensor. In another embodiment, the base HVAC block 201 may comprise a plurality of sensors for the measurement of operational parameters.

The sensor of 305 the base HVAC device block 201 is configured to measure a parameter of the HVAC system, in particular an environmental parameter, such as a temperature, humidity, volatile organic component (VOC), particulate matter (PM) and/or CO2 level of an environment controlled by the HVAC system. Alternatively, or additionally, the sensor 305 of the base HVAC device block 201 is provided to measure operational parameters of various components of the HVAC system such as an actuated position of the actuated part and/or the operational state of the HVAC field device and/or other parameters of the HVAC system, such as a flow rate or differential pressure at locations of a fluid through a fluid transportation system.

The HVAC device 200 is configured to receive power from the external source or/and it may comprise an internal power source, such as a battery source. The HVAC device 200 may also include a temporary energy storage, such as a battery and/or a capacitor. The HVAC device 200 may also operate at least with certain extent using the power harvested by the first add-on NFC antenna 210.

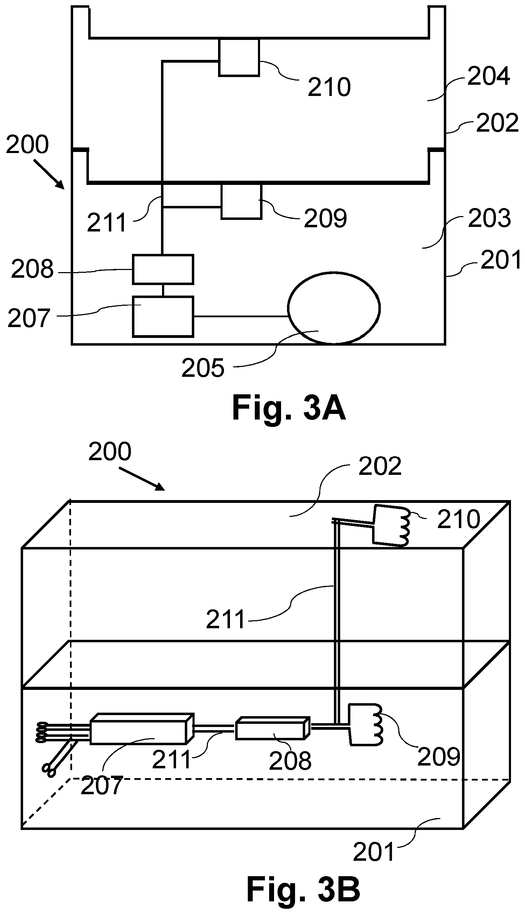

Figures 3A and 3B show a schematic depiction of the HVAC device 200 comprising an additional NFC antenna in the base HVAC block 201. In particular, the base HVAC block 201 comprises a base NFC antenna 209, positioned inside the housing 203. The base NFC antenna 209 and the first add-on NFC antenna 210 are configured to be connected to the base NFC circuit 208 using for example a high-frequency connection 211. The NFC antennas 209,210 may be positioned inside the housings 203,204 of the HVAC device blocks 201,202 or they may be positioned on the top of the housings, or they may be integrated inside the housing 203, 204.

The antennas 209 and 210 may come in different forms. NFC antenna forms an inductive loop which is configured to inductively couple an NFC circuit to an external device such as a mobile phone. In one embodiment, NFC antenna may comprise an inductive winding and a capacitor for frequency tuning. The capacitor may be positioned closer to the inductive winding, closer to the NFC circuit or shared with a 2nd NFC antenna.

In one embodiment, NFC antennas 209 and 210 are printed circuit board (PCB) antennas, in particular flexible printed circuit board (FPC) antennas, which is particularly advantageous for saving a space inside a device. Some possible implementations include rectangular shape antennas with the dimensions such as 54x27 mm2, 36x24 mm2 or 24x18mm2. These dimensions are just examples and then not limiting. Other dimensions and shapes of NFC antennas are equally applicable. Advantageously, printed circuit board antennas may also be integrated in a printed circuit board holding other electric components of the field HVAC device 200, thus reducing the total number of components and therefore the costs.

The first add-on NFC antenna 210 may be positioned outside of the HVAC field device 200 housing 204. In this embodiment, the antenna is connected electrically to the housing 204, for example using a cable.

The positioning of the antennas 209 and 210 may take different arrangements. In one embodiment they are positioned parallel to each other at distance of 20 to 30 mm. According to embodiments, there should be no significant shielding between two antennas, since the shielding may significantly reduce the performance of the add-on NFC antenna 210. When there is a metal object positioned between the two antennas209 and 210, it has to be such or can be modified in such a way that induction of eddy currents would be significantly limited. In addition, a proper capacitance tuning between two antennas is important for the overall antenna performance. Finally, use of a ferrite foil under the add-on NFC antenna and above the base NFC antenna a communication range of the add-on NFC antenna may be improved up to 50%. Following these guidelines, a performance of the first add-on NFC antenna may be similar to the base NFC antenna without need to modify the base HVAC device block.

In the embodiments where both the base HVAC antenna 210 and the add-on NFC antenna are present, it is important that tuning capacities are correctly chosen to assure that the resonance frequency of a base HVAC antenna 209 and the resonance frequency of both antennas in parallel is kept in a small range around the NFC frequency (e.g. 13.56MHz). For example, the tuning capacity of the single antenna is chosen to achieve a resonance frequency around the NFC frequency (e.g. 13.56 MHz) when only the base HVAC antenna 210 is connected, while the tuning capacity of the add-on HVAC antenna 209 is chosen such that when it is connected in parallel to the base NFC antenna 210, that the resonant frequency of both antennas is still around the NFC Frequency (e.g. 13.56 MHz).

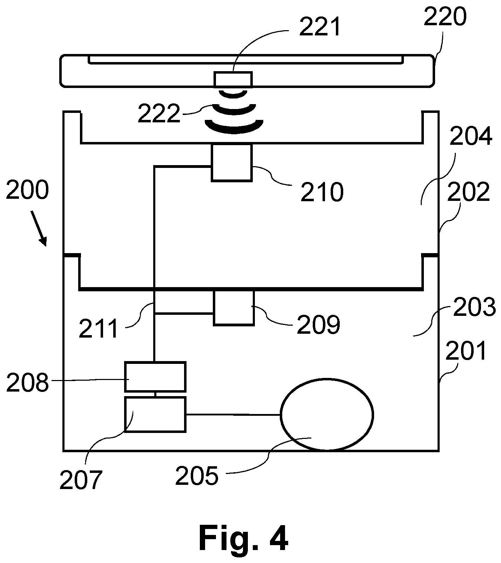

Figure 4 shows a communication between the HVAC field device 200 and an external service device 220. The external service device 220 comprises an active NFC module 221. The external service device 220 may transfer a signal via an operative connection 222. The mobile service device comprises a user interface having a touchscreen, a display with keypad, etc. The user interface is configured to display identifiers and drive parameters as well as to receive values for drive parameters. In one embodiment, the mobile service device 200 comprises a suitably programmed mobile telephone, smartphone, etc., that has an active NFC module 221 that is supplied with energy from the battery of the device in question. The transferred signal may contain a configuration data to be used to configure the HVAC field device 200.

The external service device 220 may write and/or read an information from/to the HVAC device 200 via the first add-on NFC antenna 210. This possibility advantageously allows to perform following functions: identify actuator/sensor by means of NFC ID; configure the actuator/sensor; transmit commands for actuating/operating; read operational data, statistic, and diagnosis data; start functional tests; upgrade firmware of the actuator/sensor.

The drive parameters which may be exchanged between the service device 220 and the HVAC field device 200 may relate to one or a plurality of the following readable and/or writable parameters: communications address for the HVAC device, such as e.g. an MP-Bus address, etc.; installation site, such as e.g. room, etc.; responsivity and return hysteresis; type of feedback signal; position range within the mechanical limits; run time relative to work area; rotational angle, direction of rotation; stroke, stroke direction; work torque relative to maximum possible torque; work actuating force relative to maximum actuating force, emergency position; time delay until emergency position is attained after power failure; counters for determining a number of voltage interruptions; definition of a behavior if the communications module or the communications connection fails; definition of a behavior when a power supply is switched on; definition of a behavior when keys of the drive are actuated.

Additional parameters that may be exchanged between the service device 220 and the HVAC field device 200 include read-only parameters such as: voltage source (e.g. 24VDC, 24VAC, 230VAC), number of voltage failures, total operating time, condition of energy storage /supercap, bus type (e.g. MP-Bus, BACnet MSTP or Modbus), bus address and baud rate of bus.

More particular parameters related to the actuators may be a position of driving part (read-only parameter), and read-write parameters such as running time and valve settings: valve size and type, control signal (normal, inverted), control type (open close, 3-Point, 0.5V-10V, 2-10 V, 4 -20mA), and feedback signal (normal, inverted).

More particular parameters related to the sensors may be read-only parameters such as: calibration data, calibration date, output voltage, measurement values, and statistical data; and read-write parameters such as display settings, alarm and warning levels and sources, alarm and warning activation, output signal type (5V-10V, 2-10 V, 4-20mA), evaluation range, output selection (e.g. dew point or relative humidity), and in the case of multiple sensors: selection of analogue output signals.

The base NFC antenna 209 and the first add-on NFC antenna 210 are configured to communicate with the external service device 220 when located inside a communication range of the external service device 220. In the embodiment shown in Figure 4, only the first add-on NFC antenna 210 is located inside a communication range of the external service device 220. The exemplary communication range of the first add-on NFC antenna is upto 4cm, and in a particular case upto 1 cm. In this embodiment, the base NFC antenna 209 is physically shielded by the add-on HVAC block 202, and it is not accessible to the service device 220.

In this embodiment, advantageously, the communication range of the HVAC device 200 is extended by an add-on NFC communication range of the add-on NFC antenna 209, and furthermore the HVAC device 200 is NFC enabled despite of the shielding of the base NFC antenna 210 by the add-on HVAC block 202.

The signal from the service device 220 is received by the HVAC field device 200, and more particularly by the first add-on NFC antenna 210. In one embodiment, the first add-on NFC antenna 210 is connected to a memory storage where the signal information is stored. The memory storage may be a non-volatile memory, and it may be integrated inside the base NFC circuit 208. This operation may be performed without powering the HVAC device 200, since the add-on NFC antenna 210, and respectively the connected NFC circuit 208 or 216, may harvest the power from the active NFC module 221 of the service device 220. After the powering of the HVAC field device 200, the received signal may be transferred to the base NFC circuit 208 and/or the base control module 207 for a further processing of the received signal. The received signal may contain the information related to HVAC device 200 configuration parameters. The data stored in the memory of the NFC circuit can be read using the service device 200, while it is powering the NFC circuit. Such data includes configuration and monitoring data.

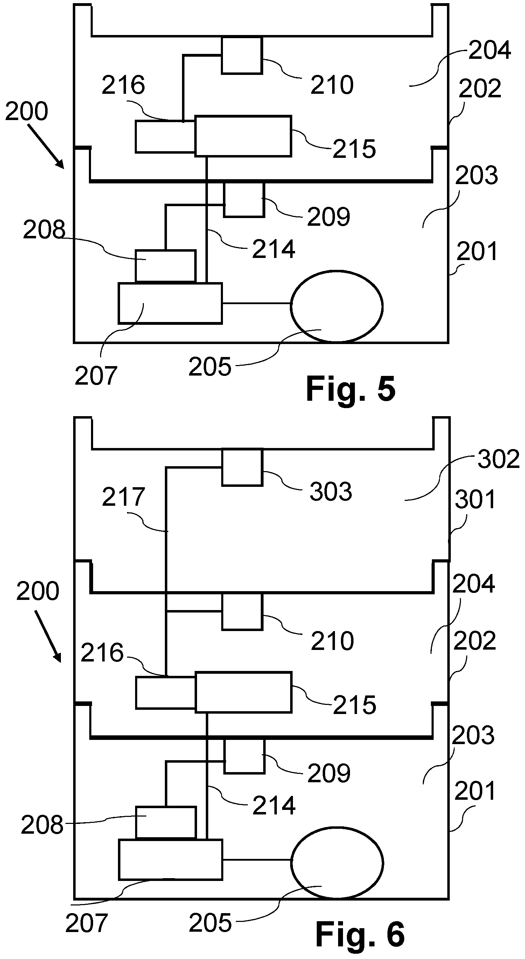

Figure 5 shows a highly schematic cross section of an embodiment of the HVAC field device 200 according to yet another embodiment of the present disclosure. In this embodiment, the first add-on HVAC device block 202 comprises a first add-on control module 215 and a first add-on NFC circuit 216. The first add-on NFC antenna 210 is connected to the first add-on NFC circuit 216 and/or the first add-on control module 215. The base control module 207 and the first add-on control module 215 may be connected through the electrical interface 214 between the base HVAC device block 201 and the first add-on HVAC device block 202. In this embodiment shown in Figure 5, the electrical connection between the first add-on NFC antenna 210 and the base HVAC device block 201 is an indirect electrical connection. In one embodiment, the first add-on control module 215 is a microcontroller. In this way, the indirect electrical connection between the first add-on NFC antenna 210 and the base control module is established. The more complex structure of the first add-on HVAC device block comparing to the embodiment of Figure 3 is related to an additional functionality added to the base HVAC block 201 by adding the add-on HVAC block 202. The additional computing power of the first add-on control module 215 further allows to control the first add-on NFC circuit 216. The additional memory in the first add-on NFC circuit 216, can be used to store more configuration parameters. The memory size of the first add-on NFC circuit 216 may be selected to by higher than the memory size of the base NFC circuit 208.

According to embodiments disclosed herein, the add-on HVAC device block 202 may comprise one or more of:
- A processing device, such as a microcontroller or application specific integrated circuit ASIC for providing computing power to the HVAC field device 200;
- A controller device, implementing HVAC control functions, such as a proportional P, a proportional-integral PI, a proportional-integral-derivative PID, an integral I and/or a neural network based control;
- A communication device, comprising a wired communication interface and/or a radio communication device - for providing communication functionalities to the HVAC field device 200. In particular, the communication device comprises one or more of:
   - A wired communication interface (such as an Ethernet, in particular a Power over Ethernet, a BUS, in particular an MP Bus or Modbus interface);
   - A Wide Area Network communication circuit (such as GSM, LTE, 3G, 4G or 5G mobile communications circuit);
   - A Low Power Wide Area Network (such as Narrowband Internet of Things NB-IoT, Long Range LoRa/ LoRaWAN, SigFox, or Long Term Evolution Category M1 LTECatM1);
   - A local area network communication circuit (such as Wireless LAN);
   - A short range wireless communication circuit (such as Bluetooth, Bluetooth low energy BLE, Thread and/or Zigbee); and/ or
   - A close-range wireless communication circuit (such as Radio Frequency Identification RFID).
- An energy storage device, comprising a capacitive storage device and/or an electrochemical storage device;
- A sensor device, comprising one or more sensors for the measurement of a parameter of an HVAC system and/or of an environmental parameter (such as temperature, humidity, etc);
- An HVAC interface device, comprising a mechanical interface to a damper and/or pipe of an HVAC system;
- A position feedback device of the actuated part;
- An electrical power supply device, for providing external electrical power to the HVAC field device, such as universal power supply devices (24 VAC to 250 VAC/24VDC-1 25VDC), or power supply devices for specific supply voltages;
- A monitoring/ service device, for performing specific service and data logging function(s); and/or
- A display device.

Add-on HVAC device block 201 according to embodiments disclosed herein may be grouped into several levels:
- Level 1 add-on HVAC device block comprises an application specific integrated circuit ASIC, specifically designed for basic actuator functions, such as opening or closing a valve or damper. Furthermore, Level 1 HVAC device blocks comprise a communication Bus that allows a seamless integration to Level 2 device block(s);
- Level 2 HVAC device block comprises a uC (microcontroller) (pre)configured for application-specific extension of the functionality of the base HVAC device block 201, such as for executing a program code of at least a specific HVAC application, such as Variable Air Volume VAV control based on data signals from a sensor for the measurement of an air flow. Furthermore, Level 2 HVAC device blocks support various network protocols, such as ModBus, BACnet or Ethernet;
- Level 3 HVAC device block comprises a uC (microcontroller) fully configurable for advanced HVAC functions and/or similar functionality as the Level 2 HVAC device blocks.

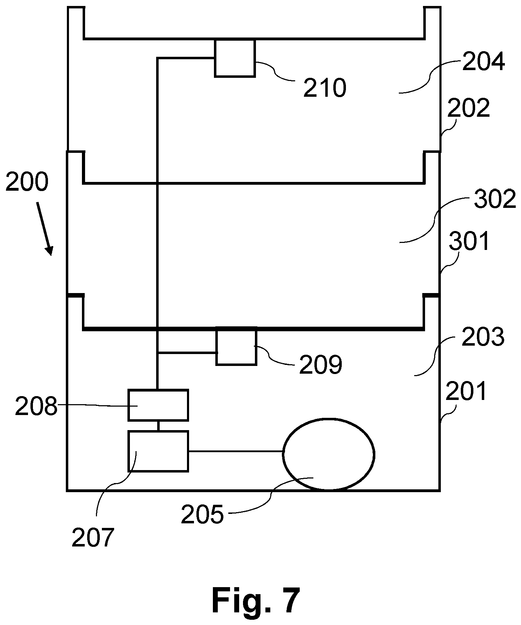

Figures 6 show a highly schematic cross section of an embodiment of the HVAC field device 200 according to yet another embodiment of the present disclosure. In this embodiment, the HVAC field device 200, further comprises a second add-on HVAC device block 301 positioned on the top of the first add-on HVAC device block 202. The second add-on HVAC device block 301 comprises a housing 302 and the second add-on NFC antenna 303. The second add-on NFC antenna 303 may be connected to the first add-on HVAC device block 202 via an electrical connection 217. The embodiment shown in Figure 7 shows an embodiment wherein the second add-on HVAC block 303 is position between the base HVAC block 201 and the first add-on HVAC block 202. In this embodiment, the second add-on HVAC block 303 serves only as an electromechanical interface between the base HVAC block 201 and the first add-on HVAC block 202.

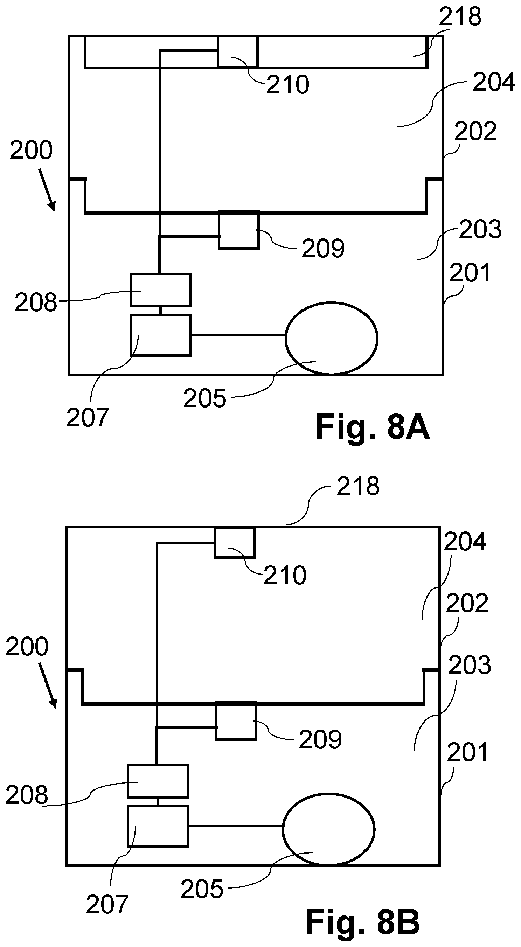

Figure 8A shows a highly schematic cross section of an embodiment of the HVAC field device 200 according to another embodiment of the present disclosure. In this embodiment, the HVAC field device 200 comprises a cover 218. The cover 218 may be positioned on the top of the add-on HVAC field device 202 or it may be an integrated part of the add-on HVAC device block 202 as shown in Figure 8B. The first add-on NFC antenna 210 may be positioned inside the cover 218 - e.g. inside or underneath a human interaction device/display 221 integrated into the cover. Alternatively, the first add-on NFC antenna 210 may be positioned underneath of the cover 218.

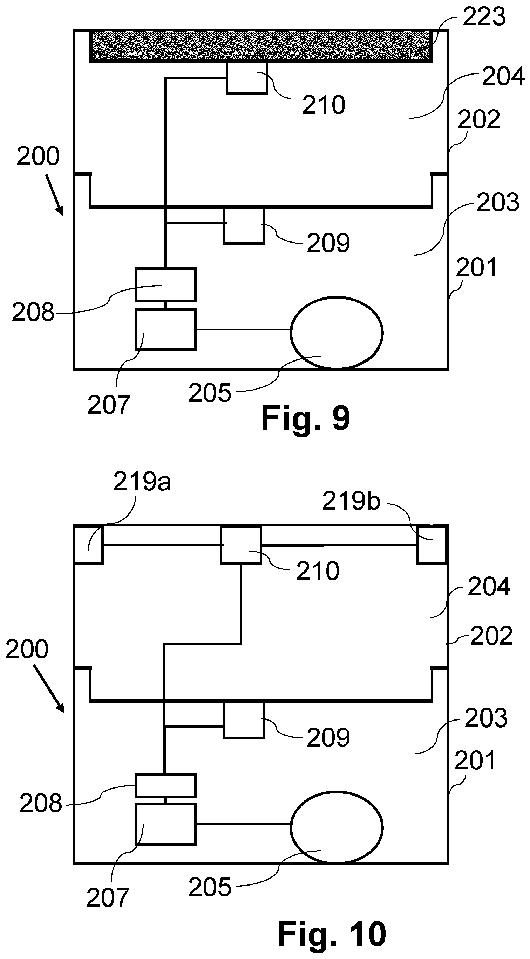

Figure 9 shows yet another embodiment of the HVAC field device 200 comprising a human interaction device 223. The human interaction device may comprise a keyboard or a touch screen. According to embodiments, the first add-on NFC antenna 210 is positioned substantially underneath the human interaction device 223. In another embodiment, the human interaction device 223 is a part of the cover 218.

In the embodiment shown in Figure 10 the first add-on NFC antenna 210 comprises at least two NFC antennas (219a, 219b) positioned at different sides of the first add-on HVAC block 202. Depending on the surroundings at the installation site, the HVAC device 200 is sometimes not freely accessible on all sides. The antennas 219a, 219b are attached to or in the housing of the device 200 such that at least one of the two antennas remains freely accessible after the HVAC device 200 is assembled and installed in the building. If the HVAC device 200 is disposed for instance in a corner that is formed by a ceiling and a wall, then one of the antennas 219a, 219b is easily accessible and the operative connection between the active NFC module of the mobile service device 220 and the HVAC device 200 may be established. In general, this configuration makes sure that at least one of antennas 219a, 219b is accessible after the installation of the HVAC field device 200. In another embodiment, it is possible to install three or more antennas.

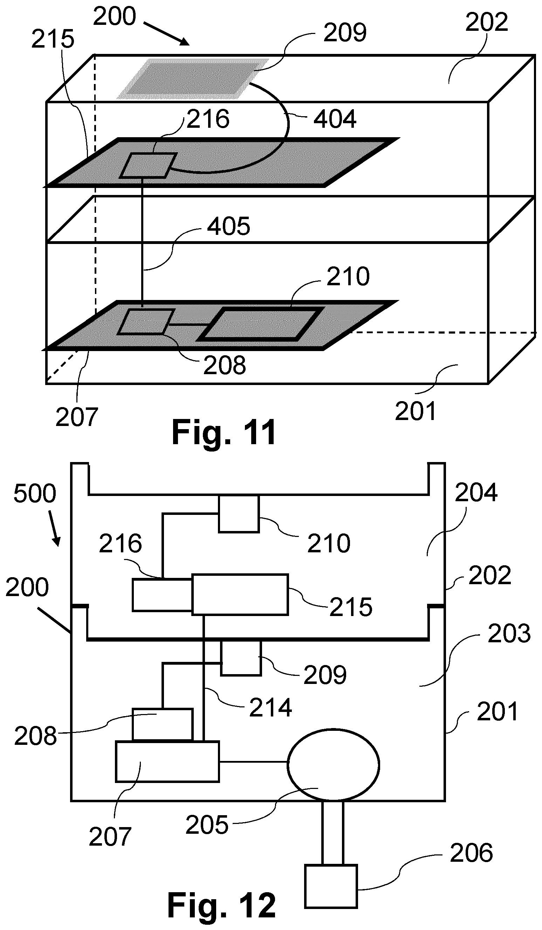

Figure 11 shows another embodiment of the HVAC field device 200, wherein the base control module 207 and the first add-on control module 215 both comprises printed circuit boards (PCB). In this embodiment, the base NFC circuit 208 and the first add-on NFC circuit 216 are both integrated onto respective PCBs and interconnected via an electrical connection 405. The first add-on NFC antenna 209 is a flex print antenna positioned on the cover of the add-on HVAC device block 202, while the base NFC antenna 210 is integrated on the PCB board.

The HVAC field device 200 as described may be incorporated in a HVAC system 500 as shown in Figure 12, which shows a HVAC system 500 comprising an HVAC field device 200 and an actuated part 206, such as a valve and/or a damper, drivingly connected to the electric motor 205 of the base HVAC device block 201 of the HVAC field device 200.

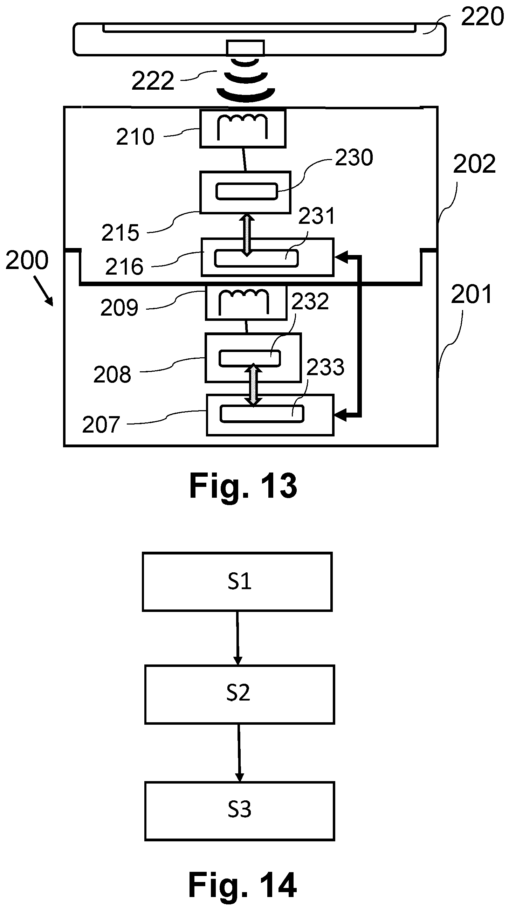

Figure 13 shows a highly schematic cross section of an embodiment of the HVAC field device 200 according to another embodiment of the present disclosure, wherein the HVAC field device 200 is configured using the service device 220. The base control module 207 comprises a RAM memory 233, and the add-on control module 216 comprises a RAM memory 231. The base NFC circuit 208 comprises Electrically Erasable Programmable Read-Only Memory (EEPROM) memory 232, while the first add-on NFC circuit 215 comprises EEPROM memory 230. The configuration information sent from the service device 220 may be received by the antenna 210 and stored in the EEPROM memory 230 before HVAC field device 200 is powered.

The method for configuring an HVAC field device 200 is illustrated in Figure 14, and it comprises the following steps:
S1: wirelessly transferring configuration information from a service device 220 to a first add-on HVAC device block 201 via a first add-on NFC antenna 210;
S2: mechanically and electrically connecting a first add-on HVAC device block 202 to a base HVAC device block 201; and
S3: configuring the HVAC field device 200 based on the received configuration information.

Alternatively, when the base HVAC block comprises a base NFC antenna 209, the step S1 may read as follows:
S1: wirelessly transferring configuration information from a service device to a base HVAC device via the base NFC antenna.

### List of reference numerals

| | |
|---|---|
| HVAC drive | 1 |
| Mobile service device | 2 |
| Actuator | 11 |
| Sensor interface | 12 |
| Communications module | 13 |
| Passive NFC transponder | 14 |
| Control module | 15 |
| Unique identifier | 16 |
| Sensor | 17 |
| Fluid connection | 18 |
| Control element | 19 |
| Operative connection | 21 |
| NFC module | 24 |
| Control module | 25 |
| User interface | 26 |
| HVAC field device | 200 |
| Base HVAC device block | 201 |
| First add-on HVAC device block | 202 |
| Base housing | 203 |
| Add-on housing | 204 |
| Electric motor/sensor | 205 |
| Actuated part | 206 |
| Base control module | 207 |
| Base near field communication (NFC) circuit | 208 |
| Base NFC antenna | 209 |
| First add-on NFC antenna | 210 |
| Electrical connection | 211a, 211b, 211c, 211 |
| Electromechanical interface | 212 |
| Electromechanical interface | 213 |
| Electrical connection | 214 |
| First add-on control module | 215 |
| First add-on NFC circuit | 216 |
| Electrical connection | 217 |
| Cover | 218 |
| NFC Antenna | 219a,219b |
| Service device | 220 |
| Active NFC module | 221 |
| Signal | 222 |
| Human interaction device | 223 |
| RAM Memory | 231,233 |
| EEPROM memory | 230,233 |
| Second add-on HVAC device block | 301 |
| Second add-on housing | 302 |
| Second add-on NFC antenna | 303 |
| Sensor | 305 |
| Electrical connection | 404, 405 |
| HVAC system | 500 |

## Claims

1. An HVAC field device (200) comprising a plurality of HVAC device blocks (201,202), the device comprising:
a) a base HVAC device block (201) comprising:
a base housing (203);
an electric motor (205) configured to drive an actuated part (206),
and/or a sensor (305) for the measurement of an operational parameter of an HVAC system;
a base control module (207) connected to the electric motor (205),
and/or the sensor (305);
a base NFC circuit (208) connected to the base control module (207);
and
b) a first add-on HVAC device block (202) comprising:
an add-on housing (204); and
a first add-on NFC antenna (210),
wherein the base HVAC device block (201) and the first add-on HVAC device block (202) are mechanically connected (212,213),
and wherein the first add-on NFC antenna (210) is electrically connected to the base HVAC device block (201).

2. The HVAC field device (200) according to claim 1, wherein the base HVAC device block (201) further comprises a base NFC antenna (209) electrically connected to the base NFC circuit (208).

3. The HVAC field device (200) according to claim 1 or 2, wherein the base HVAC device block (201) and the first add-on HVAC device block (202) are connected directly via an electromechanical interface (212,213).

4. The HVAC field device (200) according to any one of the claims 1 to 3, wherein the first add-on HVAC device block (202) comprises a first add-on NFC circuit (216) connected to the first add-on NFC antenna (210) and a first add-on control module (215) connected to the first add-on NFC circuit (216).

5. The HVAC field device (200) according to claim 4, wherein the first add-on control module (215) is connected to the base control module (207).

6. The HVAC field device (200) according to any one of the claims 1 to 5, wherein the first add-on NFC antenna (210) is configured to interact with an NFC antenna of an external service device (220), when located inside a communication range of the external service device (220), allowing data exchange between the HVAC field device and the external service device.

7. The HVAC field device (200) according to claim 6, **characterized in that** the HVAC field device is configured to harvest power from the external service device (220) via the first add-on NFC antenna (210) and/or the base NFC antenna (209).

8. The HVAC field device (200) according to any one of the claims 1 to 7, further comprising a second add-on HVAC device block (301) comprising a second add-on NFC antenna (303) electrically connected to the base HVAC device block (201) and/or the first add-on HVAC device block (202), wherein the second add-on HVAC device block (301) is positioned between the base HVAC device block (201) and the first add-on HVAC device block (202) or on the top of the first add-on HVAC device block (202).

9. The HVAC field device (200) according to claim 8, wherein the second add-on HVAC block (301) is the electromechanical interface between the base HVAC block (201) and the first add-on HVAC block (202).

10. The HVAC field device (200) according to any one of the claims 1 to 9, wherein the first add-on HVAC device block (202) further comprises a cover (218), wherein the first add-on NFC antenna (210) is positioned underneath the cover (218) inside the add-on housing.

11. The HVAC field device (200) according to any of the claims 1 to 10, the device further comprising a human interaction device (223), and wherein the first add-on NFC antenna (210) is positioned underneath the human interaction device (223) or inside or attached to the human interaction device (223).

12. The HVAC field device (200) according to any one of the claims 1 to 11, wherein the first add-on NFC antenna (210) comprises at least two NFC antennas (219a, 219b) positioned at different sides of the HVAC field device (200).

13. The HVAC field device (200) according to any of the claims 1 to 12, wherein the base NFC antenna (209) is positioned in a way that it cannot be accessed via a service device (220) to establish a communication or wherein an access to the base NFC antenna is blocked by the first add-on HVAC device block (202).

14. The HVAC field device (200) according to any one of the claims 1 to 13, wherein the communication range of the first add-on NFC antenna (210) and/or base NFC antenna (209) is from 0 to 4 cm.

15. The HVAC field device (200) according to any of the claims 1 to 14, wherein the base HVAC device block (201) comprises a connection interface of a first-type (212) and the first add-on HVAC device block comprises a connection interface of the first-type (212) and a connection interface of a second-type (213), wherein the connection interfaces of the first-type and the connection interface(s) of the second-type are configured to be mechanically connectable with each other, and wherein, the base HVAC device block (201) and the first add-on HVAC device block (202) are stacked such that the connection interface of the first-type is mechanically connected to the connection interface of the second type of adjacent HVAC device block.

16. An HVAC system (500) comprising: an HVAC field device (200) according to any one of the claims 1 to 15 and an actuated part (206), such as a valve and/or a damper, drivingly connected to the electric motor (205) of the base HVAC device block (201) of the HVAC field device (200).

17. A method for improving wireless communication between an HVAC field device (200) according to any one of the claims 1 to 15 and a service device (220), the method comprising the step of adding an add-on HVAC device block (202) comprising an NFC antenna (210) to the base HVAC device block (201) of the HVAC field device (200).

18. A method for configuring an HVAC field device (200) according to any one of claims 1 to 15, the method comprising the steps of:
- wirelessly transferring configuration information from a service device (220) to the first add-on HVAC device block (202) via a first NFC antenna (210);
- mechanically and electrically connecting the first add-on HVAC device block (202) to the base HVAC device block (201); and
- configuring the HVAC field device (200) based on the received configuration information.

## Patentansprüche

1. HVAC-Feldvorrichtung (200), die eine Vielzahl von HVAC-Vorrichtungsblöcken (201, 202) umfasst, die Vorrichtung umfassend:
a) einen Basis-HVAC-Vorrichtungsblock (201), umfassend:
ein Basis-Gehäuse (203);
einen Elektromotor (205), der dazu ausgelegt ist, ein betätigtes Teil (206) anzutreiben, und/oder einen Sensor (305) für die Messung eines Betriebsparameters einer HVAC-Anlage;
ein Basis-Steuermodul (207), das mit dem Elektromotor (205) und/oder dem Sensor (305) verbunden ist;
einen Basis-NFC-Schaltkreis (208), der mit dem Basis-Steuermodul (207) verbunden ist; und
b) einen ersten Zusatz-HVAC-Vorrichtungsblock (202), umfassend:
ein Zusatz-Gehäuse (204); und
eine erste Zusatz-NFC-Antenne (210),
wobei der Basis-HVAC-Vorrichtungsblock (201) und der erste Zusatz-HVAC-Vorrichtungsblock (202) mechanisch verbunden sind (212, 213),
und wobei die erste Zusatz-NFC-Antenne (210) elektrisch mit dem Basis-HVAC-Vorrichtungsblock (201) verbunden ist.

2. HVAC-Feldvorrichtung (200) nach Anspruch 1, wobei der Basis-HVAC-Vorrichtungsblock (201) ferner eine Basis-NFC-Antenne (209) umfasst, die elektrisch mit dem Basis-NFC-Schaltkreis (208) verbunden ist.

3. HVAC-Feldvorrichtung (200) nach Anspruch 1 oder 2, wobei der Basis-HVAC-Vorrichtungsblock (201) und der erste Zusatz-HVAC-Vorrichtungsblock (202) direkt über eine elektromechanische Schnittstelle (212, 213) verbunden sind.

4. HVAC-Feldvorrichtung (200) nach einem der Ansprüche 1 bis 3, wobei der erste Zusatz-HVAC-Vorrichtungsblock (202) einen ersten Zusatz-NFC-Schaltkreis (216) umfasst, der mit der ersten Zusatz-NFC-Antenne (210) verbunden ist, und ein erstes Zusatz-Steuermodul (215), das mit dem ersten Zusatz-NFC-Schaltkreis (216) verbunden ist.

5. HVAC-Feldvorrichtung (200) nach Anspruch 4, wobei das erste Zusatz-Steuermodul (215) mit dem Basis-Steuermodul (207) verbunden ist.

6. HVAC-Feldvorrichtung (200) nach einem der Ansprüche 1 bis 5, wobei die erste Zusatz-NFC-Antenne (210) dazu ausgelegt ist, mit einer NFC-Antenne einer externen Servicevorrichtung (220) zu interagieren, wenn sie sich innerhalb eines Kommunikationsbereichs der externen Servicevorrichtung (220) befindet, was einen Datenaustausch zwischen der HVAC-Feldvorrichtung und der externen Servicevorrichtung ermöglicht.

7. HVAC-Feldvorrichtung (200) nach Anspruch 6, **dadurch gekennzeichnet, dass** die HVAC-Feldvorrichtung so ausgelegt ist, dass sie über die erste Zusatz-NFC-Antenne (210) und/oder die Basis-NFC-Antenne (209) Strom von der externen Servicevorrichtung (220) bezieht.

8. HVAC-Feldvorrichtung (200) nach einem der Ansprüche 1 bis 7, ferner umfassend einen zweiten Zusatz-HVAC-Vorrichtungsblock (301), der eine zweite Zusatz-NFC-Antenne (303) umfasst, die mit dem Basis-HVAC-Vorrichtungsblock (201) und/oder dem ersten Zusatz-HVAC-Vorrichtungsblock (202) elektrisch verbunden ist, wobei der zweite Zusatz-HVAC-Vorrichtungsblock (301) zwischen dem Basis-HVAC-Vorrichtungsblock (201) und dem ersten Zusatz-HVAC-Vorrichtungsblock (202) oder auf der Oberseite des ersten Zusatz-HVAC-Vorrichtungsblocks (202) angeordnet ist.

9. HVAC-Feldvorrichtung (200) nach Anspruch 8, wobei der zweite Zusatz-HVAC-Vorrichtungsblock (301) die elektromechanische Schnittstelle zwischen dem Basis-HVAC-Vorrichtungsblock (201) und dem ersten Zusatz-HVAC-Vorrichtungsblock (202) ist.

10. HVAC-Feldvorrichtung (200) nach einem der Ansprüche 1 bis 9, wobei der erste Zusatz-HVAC-Vorrichtungsblock (202) ferner eine Abdeckung (218) umfasst, wobei die erste Zusatz-NFC-Antenne (210) unter der Abdeckung (218) innerhalb des Zusatz-Gehäuses angeordnet ist.

11. HVAC-Feldvorrichtung (200) nach einem der Ansprüche 1 bis 10, wobei die Vorrichtung ferner eine Menschinteraktionsvorrichtung (223) umfasst, und wobei die erste Zusatz-NFC-Antenne (210) unterhalb der Menschinteraktionsvorrichtung (223) oder innerhalb der Menschinteraktionsvorrichtung (223) positioniert oder an dieser angebracht ist.

12. HVAC-Feldvorrichtung (200) nach einem der Ansprüche 1 bis 11, wobei die erste Zusatz-NFC-Antenne (210) mindestens zwei NFC-Antennen (219a, 219b) umfasst, die an verschiedenen Seiten der HVAC-Feldvorrichtung (200) angeordnet sind.

13. HVAC-Feldvorrichtung (200) nach einem der Ansprüche 1 bis 12, wobei die Basis-NFC-Antenne (209) so positioniert ist, dass sie nicht über eine Servicevorrichtung (220) erreicht werden kann, um eine Kommunikation herzustellen, oder wobei ein Zugriff auf die Basis-NFC-Antenne durch den ersten Zusatz-HVAC-Vorrichtungsblock (202) blockiert ist.

14. HVAC-Feldvorrichtung (200) nach einem der Ansprüche 1 bis 13, wobei die Kommunikationsreichweite der ersten Zusatz-NFC-Antenne (210) und/oder Basis-NFC-Antenne (209) zwischen 0 und 4 cm liegt.

15. HVAC-Feldvorrichtung (200) nach einem der Ansprüche 1 bis 14, wobei der Basis-HVAC-Vorrichtungsblock (201) eine Verbindungsschnittstelle eines ersten Typs (212) umfasst und der erste Zusatz-HVAC-Vorrichtungsblock eine Verbindungsschnittstelle des ersten Typs (212) und eine Verbindungsschnittstelle eines zweiten Typs (213) umfasst, wobei die Verbindungsschnittstellen des ersten Typs und die Verbindungsschnittstelle(n) des zweiten Typs so ausgelegt sind, dass sie mechanisch miteinander verbindbar sind, und wobei der Basis-HVAC-Vorrichtungsblock (201) und der erste Zusatz-HVAC-Vorrichtungsblock (202) so gestapelt sind, dass die Verbindungsschnittstelle des ersten Typs mechanisch mit der Verbindungsschnittstelle des zweiten Typs des benachbarten HVAC-Vorrichtungsblocks verbunden ist.

16. HVAC-Anlage (500), umfassend: eine HVAC-Feldvorrichtung (200) nach einem der Ansprüche 1 bis 15 und ein betätigtes Teil (206), wie etwa ein Ventil und/oder eine Drossel, das antriebsmäßig mit dem Elektromotor (205) des Basis-HVAC-Vorrichtungsblocks (201) der HVAC-Feldvorrichtung (200) verbunden ist.

17. Verfahren zur Verbesserung der drahtlosen Kommunikation zwischen einer HVAC-Feldvorrichtung (200) nach einem der Ansprüche 1 bis 15 und einer Servicevorrichtung (220), wobei das Verfahren den Schritt des Hinzufügens eines Zusatz-HVAC-Vorrichtungsblocks (202), der eine NFC-Antenne (210) umfasst, zu dem Basis-HVAC-Vorrichtungsblock (201) der HVAC-Feldvorrichtung (200) umfasst.

18. Verfahren zum Konfigurieren einer HVAC-Feldvorrichtung (200) nach einem der Ansprüche 1 bis 15, wobei das Verfahren die folgenden Schritte umfasst:
- drahtlose Übertragung von Konfigurationsinformationen von einer Servicevorrichtung (220) zu dem ersten Zusatz-HVAC-Vorrichtungsblock (202) über eine erste NFC-Antenne (210);
- mechanisches und elektrisches Verbinden des ersten Zusatz-HVAC-Vorrichtungsblocks (202) mit dem Basis-HVAC-Vorrichtungsblock (201); und
- Konfigurieren der HVAC-Feldvorrichtung (200) auf der Grundlage der empfangenen Konfigurationsinformationen.

## Revendications

1. Dispositif de terrain HVAC (200) comprenant une pluralité de blocs de dispositif HVAC (201, 202), le dispositif comprenant :
a) un bloc de dispositif HVAC de base (201) comprenant :
un boîtier de base (203) ;
un moteur électrique (205) configuré pour entraîner une partie actionnée (206), et/ou un capteur (305) pour la mesure d'un paramètre opérationnel d'une installation HVAC ;
un module de commande de base (207) connecté au moteur électrique (205), et/ou au capteur (305) ;
un circuit NFC de base (208) connecté au module de commande de base (207) ; et
b) un premier bloc de dispositif HVAC supplémentaire (202) comprenant :
un boîtier supplémentaire (204) ; et
une première antenne NFC supplémentaire (210),
dans lequel le bloc de dispositif HVAC de base (201) et le premier bloc de dispositif HVAC supplémentaire (202) sont reliés mécaniquement (212, 213),
et dans lequel la première antenne NFC supplémentaire (210) est connectée électriquement au bloc dispositif HVAC base (201).

2. Le dispositif de terrain HVAC (200) selon la revendication 1, dans lequel le bloc de dispositif HVAC de base (201) comprend en outre une antenne NFC de base (209) connectée électriquement au circuit NFC de base (208).

3. Le dispositif de terrain HVAC (200) selon la revendication 1 ou 2, dans lequel le bloc de dispositif HVAC de base (201) et le premier bloc de dispositif HVAC supplémentaire (202) sont connectés directement via une interface électromécanique (212, 213).

4. Le dispositif de terrain HVAC (200) selon l'une des revendications 1 à 3, dans lequel le premier bloc de dispositif HVAC supplémentaire (202) comprend un premier circuit NFC supplémentaire (216) connecté à la première antenne NFC supplémentaire (210) et un premier module de commande supplémentaire (215) connecté au premier circuit NFC supplémentaire (216).

5. Le dispositif de terrain HVAC (200) selon la revendication 4, dans lequel le premier module de commande supplémentaire (215) est connecté au module de commande de base (207).

6. Le dispositif de terrain HVAC (200) selon l'une des revendications 1 à 5, dans lequel la première antenne NFC supplémentaire (210) est configurée pour interagir avec une antenne NFC d'un dispositif de service externe (220), lorsqu'elle est située à l'intérieur d'une plage de communication du dispositif de service externe (220), permettant l'échange de données entre le dispositif de terrain HVAC et le dispositif de service externe.

7. Le dispositif de terrain HVAC (200) selon la revendication 6, **caractérisé en ce que** le dispositif de terrain HVAC est configuré pour récolter de l'énergie à partir du dispositif de service externe (220) via la première antenne NFC supplémentaire (210) et/ou l'antenne NFC base (209).

8. Le dispositif de terrain HVAC (200) selon l'un des revendications 1 à 7, comprenant en outre un deuxième bloc de dispositif HVAC supplémentaire (301) comprenant une deuxième antenne NFC supplémentaire (303) connectée électriquement au bloc de dispositif HVAC de base (201) et/ou au premier bloc de dispositif HVAC supplémentaire (202), dans lequel le deuxième bloc de dispositif HVAC supplémentaire (301) est positionné entre le bloc de dispositif HVAC de base (201) et le premier bloc de dispositif HVAC supplémentaire (202) ou sur le dessus du premier bloc de dispositif HVAC supplémentaire (202).

9. Le dispositif de terrain HVAC (200) selon la revendication 8, dans lequel le deuxième bloc HVAC supplémentaire (301) est l'interface électromécanique entre le bloc HVAC de base (201) et le premier bloc HVAC supplémentaire (202).

10. Le dispositif de terrain HVAC (200) selon l'une des revendications 1 à 9, dans lequel le premier bloc de dispositif HVAC supplémentaire (202) comprend en outre un couvercle (218), dans lequel la première antenne NFC supplémentaire (210) est positionnée sous le couvercle (218) à l'intérieur du boîtier supplémentaire.

11. Le dispositif de terrain HVAC (200) selon l'une des revendications 1 à 10, le dispositif comprenant en outre un dispositif d'interaction humaine (223), et dans lequel la première antenne NFC supplémentaire (210) est positionnée sous le dispositif d'interaction humaine (223) ou à l'intérieur ou attachée au dispositif d'interaction humaine (223).

12. Le dispositif de terrain HVAC (200) selon l'une des revendications 1 à 1 1, dans lequel la première antenne NFC supplémentaire (210) comprend au moins deux antennes NFC (219a, 219b) positionnées sur différents côtés du dispositif de terrain HVAC (200).

13. Le dispositif de terrain HVAC (200) selon l'une des revendications 1 à 12, dans lequel l'antenne NFC de base (209) est positionnée de manière à ce qu'il ne soit pas possible d'y accéder via un dispositif de service (220) pour établir une communication ou dans lequel un accès à l'antenne NFC de base est bloqué par le premier bloc dispositif HVAC supplémentaire (202).

14. Le dispositif de terrain HVAC (200) selon l'une des revendications 1 à 13, dans lequel la portée de communication de la première antenne NFC supplémentaire (210) et/ou de l'antenne NFC de base (209) est comprise entre 0 et 4 cm.

15. Le dispositif de terrain HVAC (200) selon l'une des revendications 1 à 14, dans lequel le bloc de dispositif HVAC de base (201) comprend une interface de connexion d'un premier type (212) et le premier bloc de dispositif HVAC complémentaire comprend une interface de connexion du premier type (212) et une interface de connexion d'un deuxième type (213), dans lequel les interfaces de connexion du premier type et la ou les interfaces de connexion du deuxième type sont configurées pour être connectées mécaniquement l'une à l'autre, et dans lequel, le bloc de dispositif HVAC de base (201) et le premier bloc de dispositif HVAC supplémentaire (202) sont empilés de sorte que l'interface de connexion du premier type est connectée mécaniquement à l'interface de connexion du deuxième type de bloc de dispositif HVAC supplémentaire.

16. Installation HVAC (500) comprenant : un dispositif de terrain HVAC (200) selon l'une des revendications 1 à 15 et une partie actionnée (206), telle qu'une vanne et/ou un clapet, reliée par entraînement au moteur électrique (205) du bloc de dispositif HVAC de base (201) du dispositif de terrain HVAC (200).

17. Procédé d'amélioration de la communication sans fil entre un dispositif de terrain HVAC (200) selon l'une des revendications 1 à 15 et un dispositif de service (220), le procédé comprenant l'étape consistant à ajouter un bloc de dispositif HVAC supplémentaire (202) comprenant une antenne NFC (210) au bloc de dispositif HVAC de base (201) du dispositif de terrain HVAC (200).

18. Procédé de configuration d'un dispositif de terrain HVAC (200) selon l'une des revendications 1 à 15, le procédé comprenant les étapes suivantes :
- transfert sans fil d'informations de configuration d'un dispositif de service (220) au premier bloc dispositif HVAC supplémentaire (202) par l'intermédiaire d'une première antenne NFC (210) ;
- connecter mécaniquement et électriquement le premier bloc de dispositif HVAC supplémentaire (202) au bloc de dispositif HVAC base (201) ; et
- configurer le dispositif de terrain HVAC (200) sur la base des informations de configuration reçues.
